(19)

**Europäisches Patentamt**
**European Patent Office**
**Office européen des brevets**

(11)  **EP 4 675 415 A1**

(12)  **EUROPEAN PATENT APPLICATION**

(43) Date of publication:
**07.01.2026 Bulletin 2026/02**

(51) International Patent Classification (IPC):
**G06F 3/06** *(2006.01)*     **G11C 16/16** *(2006.01)*

(21) Application number: **25181031.3**

(22) Date of filing: **05.06.2025**

(52) Cooperative Patent Classification (CPC):
**G06F 3/0679; G06F 3/0613; G06F 3/064;**
**G06F 3/0653; G06F 3/0656**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **04.07.2024  IN 202441051370**
**17.03.2025  IN 202441051370**

(71) Applicant: **Samsung Electronics Co., Ltd.**
**Suwon-si, Gyeonggi-do 16677 (KR)**

(72) Inventors:
• **BALAKRISHNAN, Rakesh**
**560048 Bengaluru, Karnataka (IN)**
• **PASUMARTHI, Akarsh**
**560048 Bengaluru, Karnataka (IN)**
• **KATE, Ajay Avinash**
**560048 Bengaluru, Karnataka (IN)**

(74) Representative: **Kuhnen & Wacker**
**Patent- und Rechtsanwaltsbüro PartG mbB**
**Prinz-Ludwig-Straße 40A**
**85354 Freising (DE)**

(54)  **APPARATUS FOR PROVIDING DYNAMIC DATA PRESERVATION IN A STORAGE DEVICE AND OPERATING METHOD THEREOF**

(57)     A method of providing dynamic data preservation in a storage device and an apparatus (106) configured to perform the method are provided. The apparatus (106) provides dynamic data preservation in a storage device (104), in which the apparatus includes control module (208) configured to monitor (702) a fill ratio of the storage device (104), compare (704) the fill ratio with a predefined preservation fill ratio of the storage device to determine whether the fill ratio exceeds the predefined preservation fill ratio, dynamically configure a dynamic data preservation, DDP, threshold value of the storage device (104) based on the fill ratio of the storage device (104) when the fill ratio exceeds the predefined preservation fill ratio, and identify (708) important data among data stored in high performance buffer, HPB, blocks of the storage device (104) and migrate remaining data which are not identified as important data to low performance buffer, LPB, blocks of the storage device (104) based on the configured DDP threshold value during idle time of the storage device (104). Alternatively, a dynamic data preservation, DDP, threshold value of the storage device (104) may be determined based on the fill ratio using a machine learning model (606).

## FIG. 4

| Fill ratio(%) | in 1TB SSD SLC Buffer Size (GB) |
|---|---|
| 0 | 200 |
| 25 | 180 |
| 50 | 128 |
| 75 | 64 |
| 85 | 40 |
| 91 | 24 |

| 1TB SSD | Static Threshold Policy | | | DDP Threshold Policy | | |
|---|---|---|---|---|---|---|
| Fill Ratio | Static threshold | Space for available for Burst Write | Space for Read | DDP threshold | Space for available for Burst Write | Space for Read |
| 0% | 80GB | 120GB | 80GB | 80GB | 120GB | 80GB |
| 50% | | 48GB | 80GB | 80GB | 48GB | 80GB |
| 75% | | 0GB | 64GB | 25GB | 39GB | 25GB |
| 91% | | 0GB | 24GB | 10GB | 14GB | 10GB |

EP 4 675 415 A1

**Description**

TECHNICAL FIELD

Embodiments of the present inventive concept relates to a semiconductor storage device in which an apparatus and a method for providing dynamic data preservation are provided for the semiconductor storage device.

BACKGROUND

A semiconductor storage device may include memory blocks including different types of memory cells. For example, the semiconductor storage device may include single-level cell (SLC) blocks, triple-level cell (TLC) blocks, and quad-level cell (QLC) blocks. The SLC block includes single-level memory cells, and each of the single-level memory cells stores a single data-bit. The TLC block includes triple-level memory cells, and each of the triple-level memory cells stores three data-bits. The QLC block includes quad-level memory cells, and each of the quad-level memory cells stores four data-bits. The types of memory cells, in which read and write operation are performed, may affect the performance of the SSD because write speed of the memory cells in SLC block is typically twenty-times faster than write speed of memory cells in the QLC block. Therefore, the write performance of the SSD in the SLC block may be significantly better than in the QLC block. However, semiconductor storage devices generally have a limited number of the SLC blocks due to low-density characteristics of the SLC blocks.

For relieving such a limitation, semiconductor storage devices may configure some portion of the QLC blocks to function as the SLC blocks. The portion of the QLC blocks that are configured to function as the SLC blocks is referred to as a dynamic single-level cell buffer (DSB) and is also referred to as a high-performance buffer (HPB).

SUMMARY

According to an embodiment of the present inventive concept, a storage device provides a method for dynamic data preservation, and the method comprises monitoring a fill ratio of the storage device, comparing the fill ratio with a predefined preservation fill ratio of the storage device to determine whether the fill ratio exceeds the predefined preservation fill ratio, dynamically configuring a dynamic data preservation (DDP) threshold value of the storage device based on the fill ratio of the storage device when the fill ratio exceeds the predefined preservation fill ratio, and identifying important data among data stored in high performance buffer (HPB) blocks of the storage device and migrating remaining data which are not identified as important data to low performance buffer blocks of the storage device based on the configured DDP threshold value during idle time of the storage device. The DDP threshold value is adjusted to have a lower value when the fill ratio exceeds the predefined preservation fill ratio. Dynamically configuring the DDP threshold value comprises determining a size of adaptive HPB blocks based on the fill ratio, fetching a preservation factor value and a buffer size factor value of the storage device, wherein the buffer size factor value indicates a portion of the adaptive high performance buffer blocks available for upcoming write requests, calculating a value of a fill ratio function based on the predefined preservation fill ratio and the preservation factor, and determining the DDP threshold value based on the size of the adaptive HPB blocks, the value of the fill ratio function, and the buffer size factor value, wherein the buffer size factor value and preservation factor value are preset to provide a balanced read and write performance of the storage device. The important data is identified based on at least one of read locality, data locality, and write frequency.

According to an embodiment of the present inventive concept, a storage device provides a method of dynamic data preservation, and the method comprises determining a fill ratio of the storage device, determining a dynamic data preservation (DDP) threshold value of the storage device based on the fill ratio using a machine learning model, and identifying important data among data stored in high performance buffer (HPB) blocks of the storage device and migrating remaining data which are not identified as important data to low performance buffer (LPB) blocks of the storage device based on the configured DDP threshold during idle time of the storage device, wherein the portion of important data among data stored in the HPB blocks decreases in proportion to the decrease of the DDP threshold value, wherein the DDP threshold value is adjusted to have a lower value when the fill ratio exceeds the predefined preservation fill ratio. The important data is identified based on at least one of read locality, data locality, and write frequency. The machine learning model is trained based on a plurality of data sets, and the plurality of data sets comprises at least one of HPB blocks size, write performance, capacity of the storage device, and corresponding precalculated DDP threshold value. The portion of important data among data stored in the HPB blocks decreases in proportion to the decrease of the DDP threshold value.

According to an embodiment of the present inventive concept, an apparatus provides dynamic data preservation in a storage device, and the apparatus comprises a control module configured to monitor a fill ratio of the storage device, compare the fill ratio with a predefined preservation fill ratio of the storage device to determine whether the fill ratio exceeds the predefined preservation fill ratio, dynamically configure a dynamic data preservation (DDP) threshold value of the storage device based on the fill ratio of the storage device when the fill ratio exceeds the predefined preservation fill ratio,

and identify important data among data stored in high performance buffer (HPB) blocks of the storage device and migrate remaining data which are not identified as important data to low performance buffer blocks of the storage device based on the configured DDP threshold value during idle time of the storage device, wherein the DDP threshold value is adjusted to have a lower value when the fill ratio exceeds the predefined preservation fill ratio. For dynamically configuring the DDP threshold value, the control module is further configured to determine an size of adaptive HPB blocks based on the fill ratio, fetch a preservation factor value and a buffer size factor value of the storage device, wherein the buffer size factor value indicates a portion of the adaptive high performance buffer blocks available for upcoming write requests, calculate a value of a fill ratio function based on the predefined preservation fill ratio and the preservation factor, and determine the DDP threshold value based on the size of the adaptive HPB blocks, the value of the fill ratio function, and the buffer size factor value. The buffer size factor value and preservation factor value are preset to provide a balanced read and write performance of the storage device. The control module is configured to identify the important data based on at least one of read locality, data locality, and write frequency. The control module is further configured to determine a dynamic data preservation (DDP) threshold value of the storage device based on the fill ratio using a machine learning model. The DDP threshold value is adjusted to have a lower value when the fill ratio exceeds the predefined preservation fill ratio. The at least one processor is configured to identify the important data based on at least one of read locality, data locality, and write frequency. The machine learning model is trained based on a plurality of data sets, and the plurality of data sets comprise at least one of the fill ratio, the HPB blocks size, write performance, capacity of the storage device, and corresponding precalculated DDP threshold value.

## BRIEF DESCRIPTION OF THE DRAWINGS

The above and other aspects, features and advantages of the present inventive concept will be more clearly understood from the following detailed description, taken in conjunction with the accompanying drawings, in which:

FIG. 1 illustrates an exemplary environment for providing dynamic data preservation (DDP) in a semiconductor storage device (SSD) according to an embodiment of the present inventive concept.
FIG. 2 illustrates a block diagram of an apparatus to provide dynamic data preservation in a semiconductor storage device according to an embodiment of the present inventive concept.
FIG. 3 illustrates a graphical representation of a DDP threshold policy for high performance buffer (HPB) according to an embodiment of the present inventive concept.
FIG. 4 illustrates a performance comparison between static threshold policy and DDP threshold policy for the HPB according to an embodiment of the present inventive concept.
FIG. 5 illustrates an exemplary environment for providing dynamic data preservation in a semiconductor storage device according to an embodiment of the present inventive concept.
FIG. 6 illustrates a block diagram of an apparatus to provide dynamic data preservation in a semiconductor storage device using a machine learning model according to an embodiment of the present inventive concept.
FIG. 7 illustrates a flowchart diagram for providing dynamic data preservation in a semiconductor storage device according to an embodiment of the present inventive concept.
FIG. 8 illustrates a flowchart diagram for providing dynamic data preservation in a semiconductor storage device using a machine learning model according to an embodiment of the present inventive concept.

The drawings are for illustrating embodiments only. One skilled in the art will readily recognize from the following description that alternative embodiments may be employed without departing from the principle and scope of the disclosure described herein.

## DETAILED DESCRIPTION OF THE EMBODIMENTS

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

Although, specific embodiments in accompanying with the drawings have been described in detail below, the disclosure may be applicable to various modifications and alternative forms. It should be understood that the disclosure is not intended to limit the embodiments to the particular forms disclosed. The disclosure may cover all modifications, equivalents, and alternatives falling within the spirit and the scope of the disclosure.

The terms "comprises," "comprising," or any other variations thereof are intended to cover a non-exclusive inclusion. For example, a device or a method that comprises a list of elements or steps does not necessarily include only those components or steps but may include other elements or steps that are not expressly listed or inherent to such device or method. In other words, one or more elements in an apparatus proceeded by "comprises" does not, without more constraints, preclude the existence of other elements or additional elements in the apparatus.

Hereinafter, an apparatus and a method for providing dynamic data preservation in the semiconductor storage device in accordance with embodiments will be described in more detail with reference to the accompanying drawings. The same reference numerals are used for the same components in the drawings.

According to embodiments of the present inventive concept, an apparatus provides dynamic data preservation in a semiconductor storage device, in which the apparatus includes control modules configured to monitor a fill ratio of the storage device, compare the fill ratio with a predefined preservation fill ratio of the storage device to determine whether the fill ratio exceeds the predefined preservation fill ratio, dynamically configure a dynamic data preservation (DDP) threshold value of the storage device based on the fill ratio of the storage device when the fill ratio exceeds the predefined preservation fill ratio; and identify important data among data stored in high performance buffer (HPB) blocks of the storage device and migrate remaining data which are not identified as important data to low performance buffer (LPB) blocks of the storage device based on the configured DDP threshold value during idle time of the storage device.

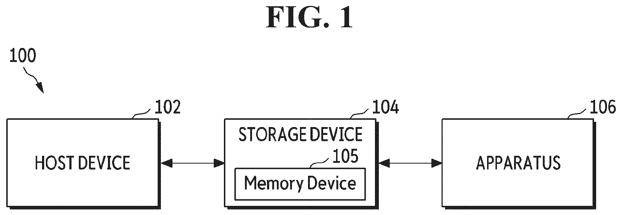

FIG. 1 illustrates an exemplary environment 100 for providing dynamic data preservation (DDP) in a semiconductor storage device (SSD) 104 according to an embodiment of the present inventive concept. An apparatus 106 may manage space of the memory device 105 in the storage device 104. The apparatus 106 may be disposed in the SSD 104. Alternatively, the apparatus 106 may be disposed outside the SSD 104 and may be interfaced with the SSD 104. A host device 102 may send read and write requests to the SSD 104. The host device 102 may be a computing device such as a computer, server, or embedded system. A person skilled in the art may appreciate that the computing device also may be a smartphone, a cellular phone, a mobile phone, a mainframe machine, a computer workstation, a laptop and/or a consumer electronic (CE) device. The communication between the host device 102 and the SSD 104 may be facilitated through standardized protocols such as Serial Advanced Technology Attachment (SATA), Non-Volatile Memory Express (NVMe), Universal Flash Storage (UFS), Fiber Channel communication protocol, and other interface protocols.

According to an embodiment, the SSD 104 may include a memory device 105, in which NAND flash memory devices are widely used for the memory device 105. Each of the NAND flash memory devices includes memory cell blocks, and each memory cell block include a plurality of memory cells. Data may be is written into and read from the memory cells of the SSD 104. Each memory cell may store a certain number of bits, and the number of bits may be determined by a control circuit of the SSD 104. For example, the SSD 104 may include different types of memory blocks which may be a single-level cell (SLC) block, triple-level cell (TLC) block and quad-level cell (QLC) block. Each memory cell of the SLC block may store one-bit data, while each memory cell of the TLC blocks may store three-bits data, and each memory cell of the QLC block may store four-bits data.

The read and write speed of the SSD 104 in the SLC block are faster than the read and write speed in the QLC block because each memory cell of the SSD block has only one of two voltage levels while each memory cell of the QLC block has one of sixteen voltage levels. Accordingly, the SLC block has superior endurance characteristics to the QLC block.

Because of the low read and write speed in the QLC block, the QLC block may be referred to as a low-performance buffer (LPB) block and may be used for storing less frequently accessed data or sequentially accessed data where high density rather than high speed is required. On the other hand, the SLC block may be referred to as a high-performance buffer (HPB) block and may be used for fast and frequent data access in the SSD 104.

Because the number of available SLC blocks in the SSD 104 is limited due to their lower density characteristics, some portion of the QLC blocks may be dynamically configured to function as single-level cell (SLC) block. The QLC block that are configured to function as the SLC block is referred to as a dynamic single-level cell buffer (DSB) and may function as the HPB block.

Because the QLC block is configured to function as SLC block, the SSD 104 may store the incoming write data from the host device 102 into the DSB, thereby enhancing overall performance of the SSD.

However, as QLC blocks are occupied by write data, the number of QLC blocks that can be configured to function as SLC blocks may be decreased. Accordingly, the overall size of the DSB blocks may be reduced, thereby causing performance degradation of the SSD 104.

The SSD 104 may free up space of the DSB blocks by migrating data from the DSB block to the QLC block. The migrating operation may be performed in foreground during idle time. Through the migrating operation, the freed-up space in the DSB blocks may accommodate upcoming host write requests. Herein, the proportion of QLC blocks that is occupied by stored data is referred to as "fill ratio."

At high fill ratio, in which the proportion of QLC blocks occupied by data is high, if the freed-up space in the DSB block is not enough to accommodate write and read requests from the host device 102, the write and read requests are inevitably directed to the QLC blocks, which may bring performance degradation of the SSD because the write and read operation in the QLC blocks is much slower than in the DSB block. Therefore, for maintaining optimal performance of the SSD, the migration process is necessary to maintain the optimum size of the DSB block while preserving important data in the DSB block.

In cases in which the upcoming data is written into the QLC blocks instead of the DSB block due to lack of space in the DSB block, the write and read performance of the data in the SSD may be degraded. The performance degradation due to inefficient use of the DSB block may not be cured even though more idle time is given.

The DSB block space may be freed-up during the idle time to increase an effective size of the DSB to a level with which balanced read and write operations are possible. By securing the effective DSB size, write performance of the SSD 104 may be improved where write and read operations are mixed with the intermittent idle time. Furthermore, important data may be preserved in the DSB block because the SSD 104 may maintain a portion of DSB space for the important data.

For freeing-up space in the DSB block, a static threshold policy may be used in which the static threshold value may indicate absolute amount of data that may be retained in the DSB block irrespective of the capacity or fill ratio of the storage device. When the stored data in the DSB blocks exceeds the static threshold value, some of the stored data may be migrated to the QLC blocks.

However, the static threshold technique may not be effective depending on applications, because once the data size occupied in DSB block exceeds the static threshold value, upcoming host writes data are immediately migrated from the DSB block to the QLC block. Such an immediate migration of data from the DSB block to the QLC block may cause performance drop while performing write operation in response to write requests from the host device 102.

For improving the write operation performance of the SSD 104 by balancing the read operation performance and the write operation performance, it is necessary to retain recent user data in the DSB block because those recent data may be frequently accessed in time. The effective DSB size may be estimated by subtracting the static threshold value from an adaptive DSB size as shown in Equation 1.

$$\text{effective DSB size} = \text{adaptive DSB size} - \text{static threshold value}$$

Equation 1

The adaptive DSB size indicates the number of QLC blocks which is configured to the DSB blocks, and the effective DSB size indicates the number of available DSB blocks among the adaptive DSB blocks. For example, if the static threshold value is fixed to 80 GB and the adaptive DSB size is 80 GB, then the effective DSB size becomes zero and all the upcoming write requests from the host will be redirected to the QLC blocks, thereby causing performance degradation of the SSD. For preventing the lack of space in the DSB block and maintaining optimum read and write performance of the storage device, proper managing of the space in the DSB block is necessary.

At high fill ratio in which the proportion of QLC blocks occupied by data is high, the number of available blocks in the DSB may be reduced. In other words, the effective DSB size may be reduced. The SSD 104 may free up space of the DSB by migrating data from the DSB block to the QLC block in the foreground during idle time. This migrating operation may allow more freed-up space in the DSB to accommodate upcoming host write requests.

The embodiments of the present inventive concept are focused on freeing up space in the DSB block during the idle time to secure an effective DSB size, in which the performance of the SSD 104 may be improved. An apparatus 106 may dynamically free up the space in the DSB by adopting a dynamic data preservation (DDP) threshold policy based on a fill ratio of the SSD 104. The apparatus 106 may be configured to dynamically adjust the dynamic data preservation (DDP) threshold value when the fill ratio exceeds the predefined preservation fill ratio. The apparatus 106 may be further configured to preserve important data which are frequently used in the HPB blocks while migrating less important data of the HPB blocks to LPB blocks which may be QLC blocks of the SSD 104. The migrating operation may be performed based on the DDP threshold value which is set up during idle time. The communication between the apparatus 106 and the SSD 104 may be typically facilitated through standardized protocols such as Serial Advanced Technology Attachment (SATA), Non-Volatile Memory Express (NVMe), Universal Flash Storage (UFS), Fiber Channel communication protocol, and other communication protocols.

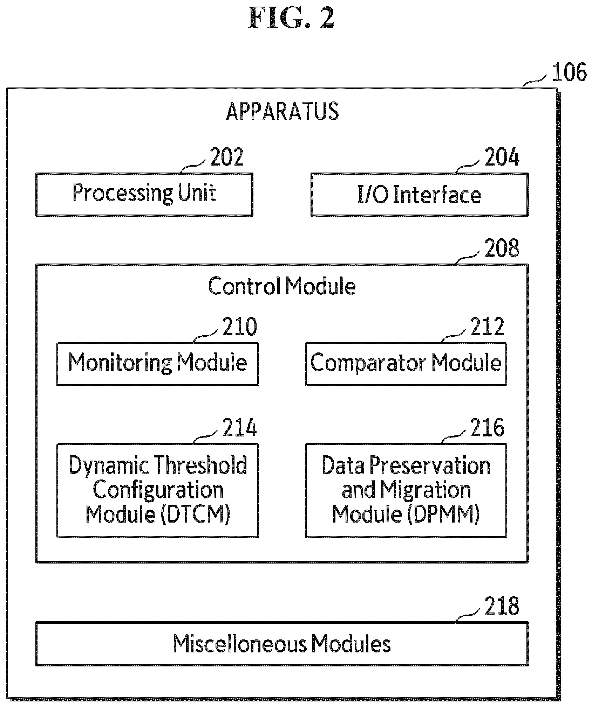

FIG. 2 illustrates a block diagram of an apparatus 106 to provide dynamic data preservation in a semiconductor storage device according to an embodiment of the present inventive concept. The apparatus 106 may comprise a processing unit 202 including at least one processor, an input/output (I/O) interface 204, and a control module 208. The processor in the processing unit 202 may execute programs for handling user or system-generated business processes. The processing unit 202 may include specialized processing units such as integrated system controllers, memory management control units, floating point units, graphics processing units, and digital signal processing units.

The processing unit 202 may communicate with one or more input/output (I/O) devices via I/O interface 204. The I/O interface 204 may employ communication protocols/methods such as audio interface, IEEE-1394, Universal Serial Bus (USB), infrared interface, PS/2, BNC, coaxial interface, Digital Visual Interface (DVI), high-definition multimedia interface (HDMI), Radio Frequency (RF) antennas, S-Video, Video Graphics Array (VGA), IEEE 802.n /b/g/n/x, Bluetooth, and mobile communication protocol including Code-Division Multiple Access (CDMA), High-Speed Packet Access (HSPA+), Global System For Mobile Communications (GSM), and Long-Term Evolution (LTE)

The apparatus 106 may also include logic, circuitry, and interfaces that may be configured to provide the process visualization and the simulated training. The apparatus 106 may be implemented in a computing device such as a smartphone, a cellular phone, a mobile phone, a mainframe machine, a computer workstation, a laptop computer, and a consumer electronic (CE) device.

The memory device 105 of the SSD 104 may be processed by control module 208 of the apparatus 106. The control module 208 may be disposed within the apparatus 106 for efficient communication with the processing unit 202. Alternatively, the control module 208 may be disposed outside the apparatus 106.

According to an embodiment, the control module 208 may comprise a monitoring module 210, a comparator module 212, a dynamic threshold configuration module (DTCM) 214, a data preservation and migration module (DPMM) 216, and miscellaneous modules 218. The miscellaneous modules 218 may be used to perform various miscellaneous functionalities of the apparatus 106. It will be appreciated that such modules may be represented as a single module or a combination of different modules. The modules may be implemented in hardware, software, firmware, or combination thereof. The control module 208 may be implemented by various techniques such as computer programs, neural networks, machine learning algorithms, embedded systems design, and cloud computing architectures.

The monitoring module 210 may monitor a fill ratio of the SSD 104 in real-time. The fill ratio may indicate the proportion of space occupied by data in the DSB block of the SSD 104. As the fill ratio increases, the size of available blocks in the DSB block may be reduced. Therefore, it is necessary to monitor the fill ratio of the DSB block within the SSD 104 for proper space management of the DSB block for accommodating upcoming host requests. By monitoring the fill ratio, the apparatus 106 may manage the space in the DSB block by migrating less important data from the DSB block to lower-performance block during idle time or by configuring additional QLC blocks as DSB blocks.

The comparator module 212 may compare the fill ratio with a predefined preservation fill ratio of the SSD 104 to determine whether the fill ratio exceeds the predefined preservation fill ratio. Upon detecting that the fill ratio exceeds the predefined preservation fill ratio by the comparator module 212, the SSD 104 may begin to adjust the DDP threshold value to optimize read and write performance of the storage device. For example, when the fill ratio is between 0% and 45%, the DDP threshold value may be fixed to 80 GB which is a base value of the DDP threshold value. When the fill ratio exceeds 45%, the DDP threshold value may be dynamically adjusted to balance the amount of data preserved in the HPB based on the fill ratio. The adjusted DDP threshold value may be used for managing the space of the DSB blocks.

The dynamic threshold configuration module (DTCM) 214, upon detecting that the fill ratio exceeds the predefined preservation fill ratio, may dynamically configure the DDP threshold value of the SSD 104. Based on the dynamically configured DDP threshold value, the DTCM 214 may determine a size of adaptive HPB blocks. For estimating the DDP threshold value to be configured, the DTCM module 214 may fetch a preservation factor value and a buffer size factor value of the SSD 104. The buffer size factor value may indicate a percentage of available HPB blocks among the adaptive HPB blocks. The preservation factor may indicate the characteristics of the DSB to preserve data in the DSB. The higher the preservation factor is, the more data may be preserved in the DSB rather than being migrated to the QLC block. The DTCM 214 may calculate the value of a fill ratio function F(X) based on the predefined preservation fill ratio and the preservation factor value. The value of the fill ratio function F(X) may be estimated from Equation 2 shown below, where X is the fill ratio in percentage.

$$F(X) = \begin{cases} 1, \text{If X} < \text{predefined preservation fill ratio, else} \\ \{1 + \frac{X - \text{predefined preservation fill ratio}}{\text{preservation factor value}}\} \end{cases}$$

Equation 2

The DTCM 214 may determine the DDP threshold value based on the size of the adaptive HPB blocks, the fill ratio function F(X), and the buffer size factor value. The buffer size factor value and the preservation factor value are preset to provide a balanced read and write performance of the SSD 104. The DDP threshold value may be estimated from Equation 3 shown below.

$$\text{DDP threshold value} = \begin{cases} \text{If F(X)} = 1, \text{then DDP threshold base value} \\ \text{Else, } \{\text{adaptive DSB} - (F(X) * \text{adaptive DSB} * \text{buffer size factor value})\} \end{cases}$$

Equation 3

Exemplary values of predefined preservation fill ratio, preservation factor, buffer size factor and DDP threshold base are illustrated for determining the DDP threshold value are illustrated in Table 1.

Table 1.

| Predefined preservation fill ratio | 45% |
|---|---|

(continued)

| | |
|---|---|
| Preservation factor value | 50% |
| Buffer size factor value | 0.4 |
| DDP threshold base value | 80 GB |

An example of managing the space of the DSB blocks by dynamically configuring the DDP threshold value is illustrated in Table 2. For the SSD 104 having capacity of 1TB, when the fill ratio of the SSD 104 is zero and the adaptive DSB size is 200 GB, all of the adaptive DSB blocks may be available for upcoming write requests. As the fill ratio increases, the adaptive DSB size decreases. When the fill ratio reaches to 91%, only 20 GB of the DSB blocks remain available among the adaptive DSB blocks. By dynamically modifying the DDP threshold value, the DSB block space may be effectively managed, in which the upcoming data from the host device 102 may not be migrated from the HPB to the QLC blocks due to the freed-up space in the DSB block, thereby, improving write speed for the upcoming data. The space of the DSB block may be managed by dynamically adjusting the DDP threshold value as illustrated in Table 2.

Table 2

| DDP threshold base value (GB) | Fill Ratio (%) | Adaptive DSB (GB) | Adaptive DSB * buffer size factor value (GB) | F(X) | DDP threshold value (GB) |
|---|---|---|---|---|---|
| 80 | 0 | 200 | 80 | 1 | 80 |
| 80 | 10 | 190 | 76 | 1 | 80 |
| 80 | 15 | 180 | 72 | 1 | 80 |
| 80 | 20 | 170 | 68 | 1 | 80 |
| 80 | 25 | 160 | 64 | 1 | 80 |
| 80 | 30 | 150 | 60 | 1 | 80 |
| 80 | 35 | 140 | 56 | 1 | 80 |
| 80 | 45 | 130 | 52 | 1 | 78 |
| 80 | 50 | 120 | 48 | 1.1 | 68 |
| 80 | 55 | 110 | 44 | 1.2 | 58 |
| 80 | 60 | 100 | 40 | 1.3 | 48 |
| 80 | 60 | 90 | 36 | 1.3 | 44 |
| 80 | 65 | 80 | 32 | 1.4 | 35 |
| 80 | 70 | 70 | 28 | 1.5 | 28 |
| 80 | 75 | 60 | 24 | 1.6 | 22 |
| 80 | 80 | 50 | 20 | 1.7 | 16 |
| 80 | 85 | 40 | 16 | 1.8 | 12 |
| 80 | 90 | 30 | 12 | 1.9 | 8 |
| 80 | 91 | 20 | 8 | 1.92 | 5 |

According to an embodiment, an optimal quantity of important data may be retained in the HPB based on the DDP threshold value. The data to be retained in the HPB may be determined based on importance of data. The least important data may be moved to the QLC block for generating additional free space in the HPB, ensuring that the important data may be preserved. During the host workload, the DDP threshold value may change the amount of the important data preserved in the DSB blocks dynamically.

The data preservation and migration module (DPMM) 216 may identify the important data among data stored in the DSB blocks. The DPMM 216 may preserve important data in HPB blocks of the SSD 104 and migrate remaining data of the HPB blocks to the LPB blocks of the SSD 104 based on the configured DDP threshold value during idle time. The DPMM 216 may identify the important data based on at least one of read locality, data locality, and write frequency.

The read locality may indicate the criticality of the data based on the number of reads or recent reads of the data in the SSD 104. The data locality may indicate whether the data are sequential or random, in which large data streams of sequential data may be determined not to be accommodated in the HPB. The write frequency may be used for the DPMM 216 to determine whether the data are hot data or cold data. The data may be determined to be hot data if the data are repeatedly written into the DSB by the host device 102. Upon determining the importance of the data by the DPMM 216, the DDP threshold policy may be used for preserving the data in the HPB. If the HPB becomes full, the DPMM 216 may migrate the data which is not identified as important data to the LPB blocks. The LPB blocks may be QLC blocks.

By migrating the data from the HPB to the QLC block, the HPB may be freed up with space, and the upcoming data from the host device 102 may be stored in the HPB. Therefore, it is necessary to balance between retaining the important data in the HPB and freeing up space of the HPB for the fast write operation of upcoming data from the host device 102.

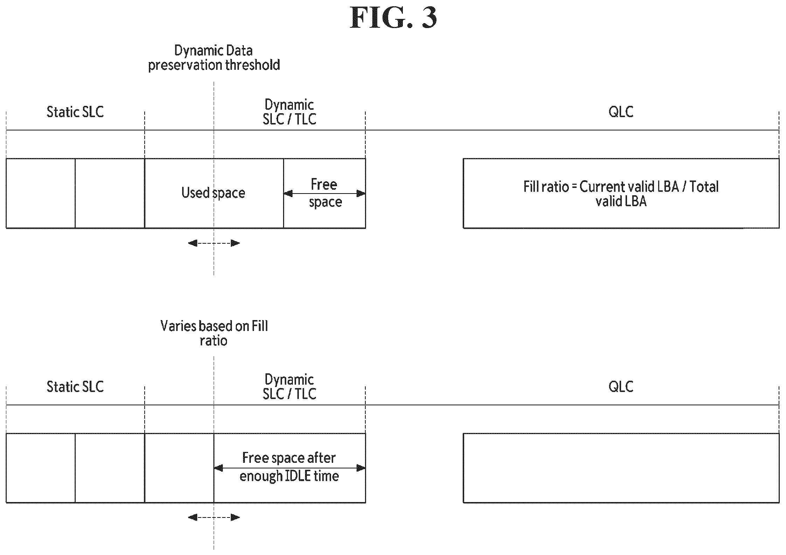

FIG. 3 shows a graphical representation of a DDP threshold policy for HPB according to an embodiment of the present inventive concept. The data preservation threshold value may be dynamically calculated based on the fill ratio, and the free space in the HPB may be properly managed for upcoming read and write requests from the host device 100. By dynamically configuring the DDP threshold value, the read and write performance of the SSD 104 may be optimally balanced. Referring to FIG. 3, the DDP threshold value provides a reference value, based on which the DDP threshold policy may start to adjust DDP threshold value. When the fill ratio exceeds a predetermined data preservation value, freeing up space in the DSB may be initiated by migrating less important data from the HPB to the LPB. If the idle time for migrating data is given enough, the migration operation may continue until the space occupied by the data in the DSB reduced to the DDP threshold value.

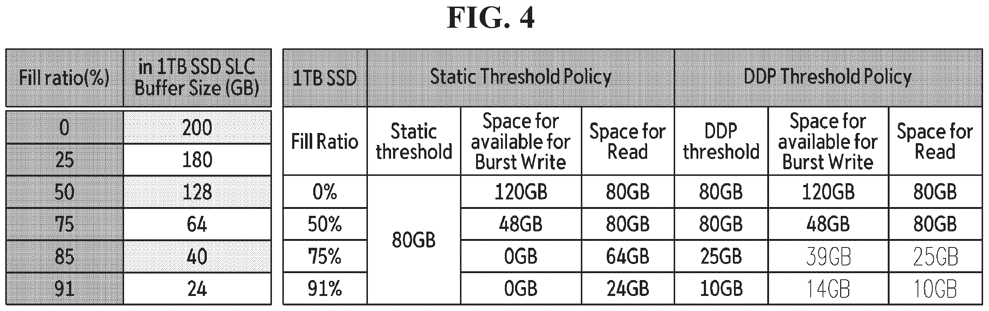

FIG.4 illustrates a performance comparison between static threshold policy and DDP threshold policy for the HPB according to an embodiment of the present inventive concept. Referring to FIG. 4, as fill ratio increases in 1TB SSD, available space in DSB may be reduced differently for the static threshold policy and the DDP threshold policy. For example, in a static threshold policy, 200GB among the 1TB memory space may be allocated for the DSB, and the static threshold value may be set to 80GB. When fill ratio is 0%, 120GB among the 200GB of the DSB space may be allocated for the burst write and 80GB for the read operation. However, when the fill ratio reaches to 50%, available space of the DSB may be reduced to 128GB, and 48GB among the 128GB may be allocated for the burst write and 80GB for the read operation. When the fill ratio reaches to 75%, available space of the DSB may be reduced to 64GB and all of the 64GB may be allocated for the read operation and no space in the DSB is available for burst write. Because there is no space in the DSB for burst write operation, write data from the host device 100 may be immediately redirected to the QLC block, and performance for the write operation may be severely degraded. On the other hand, in a DDP threshold policy, when the fill ratio reaches to 75%, DDP threshold value may be adjusted to 25GB, and 39GB among the 64GB of available space in the DSB may be allocated for the burst write and 25GB for the read operation based on the DDP threshold policy. Because 39GB of the DSB space is available for the burst write operation and 25GB of the DSB space is available for read operation, the DSB may accommodate the upcoming write data from the host while maintaining important data in the DSB. By dynamically configuring the DDP threshold value, the DSB space available for burst write and the DSB space for read performance may be optimally balanced and may enhance overall performance of the SSD 104. Compared with static threshold policy, about 50% of performance improvement is estimated.

The performance improvement by applying the DDP threshold policy may depend on the fill ratio. Considering the variation range of the fill ratio in field application, overall performance improvement of the SSD 104 is estimated to reach at least 30%. Although the embodiments illustrate using QLC blocks as DSB, the DDP threshold policy may also be applicable to TLC blocks.

For estimating performance improvement of the SSD 104 by applying DDP threshold policy, various subtest results for PCMark 10 (PCM10) were executed at various percentages of the fill ratio, with each subtest reflecting different end-user application behaviors. The subtest workload scenarios may include Low queue depth (QD) sequential reads, Low queue depth (QD) random 4K reads, Multiple reads of the same logical page number (LPN) at different intervals, Sequential writes interspersed with intermittent reads and Intermittent periods of idle time occurring at different intervals. The DDP threshold policy of the present disclosure demonstrates effective performance improvement across nearly all of the above workload scenarios.

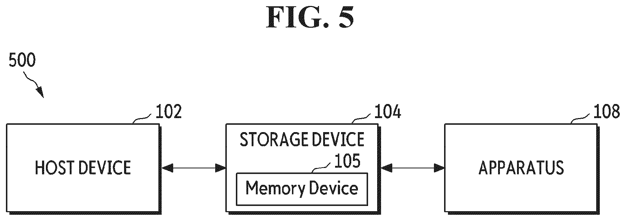

FIG. 5 illustrates an exemplary environment 500 for providing dynamic data preservation in a semiconductor storage device using machine learning model according to an embodiment of the present inventive concept. A host device 102 may request read and write operation to the semiconductor storage device (SSD) 104. The detailed explanation of the host device 102 and the SSD 104 is explained in description referring to FIG. 1 except that the machine learning model is applied for optimizing the allocation between the write space and read space in the DSB based on the fill ratio. The DSB space in the SSD 104 may be freed by dynamically configuring a dynamic data preservation (DDP) threshold value of the storage device based on the fill ratio of the storage device using a machine learning model. The communication between an apparatus 108 and the SSD 104 may be facilitated through standardized protocols such as Serial Advanced Technology Attachment (SATA), Non-Volatile Memory Express (NVMe), Universal Flash Storage (UFS), Fiber Channel communication protocol and other interface protocols.

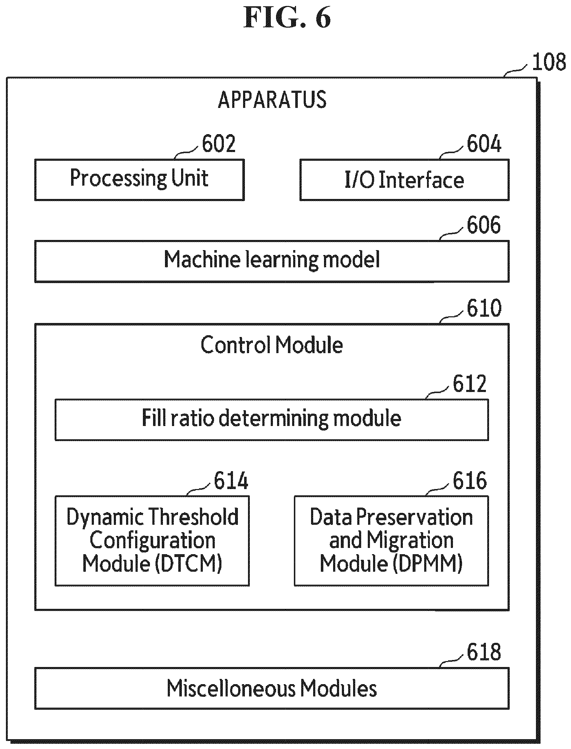

FIG. 6 illustrates a block diagram of an apparatus 108 to provide dynamic data preservation in a semiconductor storage device using a machine learning model 606. The apparatus 108 may comprise a processing unit 602 including at least one processor, and an input/output (I/O) interface 604. The processor in the processing unit 602 may execute programs for handling user or system-generated business processes. The processing unit 602 may include specialized processing units such as integrated system (bus) controllers, memory management control units, floating point units, graphics processing units, and digital signal processing units.

The processing unit 602 may communicate with one or more input/output (I/O) devices via I/O interface 604. The I/O interface 604 may employ communication protocols/methods such as audio interfaces, IEEE-1394, serial bus, Universal Serial Bus (USB), infrared interface, PS/2, BNC, coaxial, component, composite, Digital Visual Interface (DVI), high-definition multimedia interface (HDMI), Radio Frequency (RF) antennas, S-Video, Video Graphics Array (VGA), IEEE 802.n /b/g/n/x, Bluetooth, and mobile communication protocol including Code-Division Multiple Access (CDMA), High-Speed Packet Access (HSPA+), Global System For Mobile Communications (GSM), and Long-Term Evolution (LTE).

The apparatus 108 may also include logic, circuitry, and interfaces that may be configured to provide the process visualization and the simulated training. The apparatus 108 may be implemented in a computing device such as a smartphone, a cellular phone, a mobile phone, a mainframe machine, a computer workstation, a laptop computer and a consumer electronic (CE) device.

The memory device 105 in the SSD 104 may be processed by control module 610 of the apparatus 108. The control module 610 may be disposed within the apparatus 108 for efficient communication with the processing unit 602 as shown in FIG. 6. Alternatively, the control module 610 may be disposed separately from the apparatus 108.

The control modules 610 may comprise a fill ratio determining module 612, a dynamic threshold configuration module (DTCM) 614, a data preservation and migration module (DPMM) 616, and miscellaneous modules 618. The miscellaneous modules 618 may be used to perform various miscellaneous functionalities of the apparatus 108. The modules may be a single module or a combination of several modules. The modules may be implemented in hardware, software, firmware, or combination thereof. The control module 610 may be implemented by various techniques such as computer programs, one or more neural networks, machine learning algorithms, embedded systems design, and cloud computing architectures.

The fill ratio determining module 612 may determine a fill ratio of the SSD 104 in real-time. The fill ratio may indicate the proportion of space occupied by data in the SSD 104. As the fill ratio increases, the size of available blocks in the DSB block may be reduced. Therefore, it is necessary to determine the fill ratio for proper space management of the DSB block for accommodating upcoming host requests.

The dynamic threshold configuration module (DTCM) 614 may determine a dynamic data preservation (DDP) threshold value of the SSD 104 based on the fill ratio using the machine learning model 606. The machine learning model 606 may be trained based on a plurality of data sets comprising one or more of fill ratio, high performance buffer blocks size, write performance, capacity of the storage device, and corresponding precalculated DDP threshold value. Furthermore, the machine learning model 606 may be trained based on the one or more performance test results in which the performance test may include PCmark score, PCmark bandwidth, a QLC read count, Foreground (FG) migration count and Background (BG) migration count. The machine learning model 606 test may be performed by providing sample input parameters and checking the machine learning model output DDP threshold. The DDP threshold value may be derived using the model 606 for further use. The machine learning model 606 may include regression models such as random forest, gradient boosting, and neural network.

The data preservation and migration module (DPMM) 616 may identify the important data among data stored in the HPB of the SSD 104 and migrate the remaining data of the HPB blocks to LPB blocks of the SSD 104 based on the configured DDP threshold value during idle time. The DPMM 616 may identify the important data based on at least one of read locality, data locality, and write frequency.

The read locality may be used by the DPMM module 616 for determining criticality of the use data by determining used number of reads or recent reads of the data in the SSD 104. The data locality may indicate whether the data are sequential or random, in which large data streams of sequential data may not be accommodated within the HPB. The write frequency may be used for the DPMM 616 to determine whether the data are hot data or cold data. The data may be determined to be hot data if the data are repeatedly written into the DSB by the host device 102. Upon determining the data as important data by the DPMM 616, the DDP threshold policy may be applied for preserving the important data in the HPB blocks. In case the HPB blocks are full, the DPMM 616 may migrate the data which is not identified as important data to the LPB blocks. The LPB blocks may be the QLC block.

By migrating the data from the HPB to the QLC block, the HPB may be freed up with space, and the upcoming data from the host device 102 may be stored in the HPB. Therefore, it is necessary to balance between retaining the important data in the HPB and freeing up space of the HPB for the fast write operation of upcoming data to be written in the SSD 104.

Referring back to FIG. 3 which shows a graphical representation of a DDP threshold policy for HPB according to an embodiment of the present inventive concept. The DDP threshold value may be dynamically calculated using the machine learning model 606, and the freed-up space in the HPB may be properly managed for upcoming read and write requests from the host device 102.

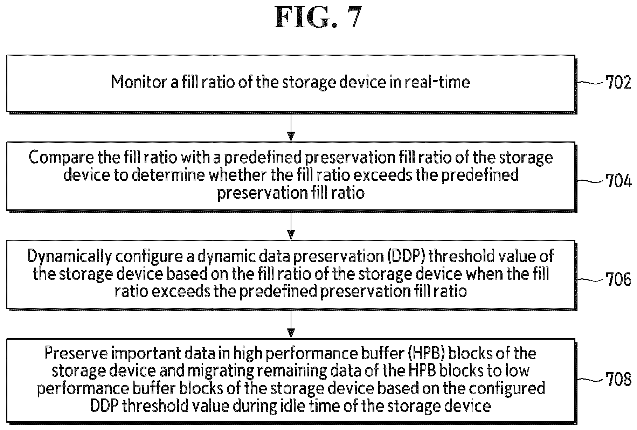

FIG. 7 illustrates a flowchart diagram for providing dynamic data preservation in a semiconductor storage device according to an embodiment of the present inventive concept.

In the step 702, the monitoring module 210 monitors the fill ratio of the SSD 104 in real-time. The fill ratio may indicate the proportion of space occupied by data in the SSD 104. As the fill ratio increases the size of available blocks in the DSB block may be reduced. Therefore, it is necessary to monitor the fill ratio of the DSB block within the SSD 104 for proper space management of the DSB block for accommodating upcoming host requests. By monitoring the fill ratio, the monitoring module 210 may manage the space in the DSB block by migrating less important data from the DSB block to lower-performance blocks during idle time or by configuring additional QLC blocks as DSB blocks.

In the step 704, the comparator module 212 may compare the fill ratio with a predefined preservation fill ratio of the SSD 104 to determine whether the fill ratio exceeds the predefined preservation fill ratio. Upon detecting that the fill ratio exceeds the predefined preservation fill ratio by the comparator module 212, the SSD 104 may begin to adjust the DDP threshold value to balance read and write performance of the storage device. For example, the fill ratio between 0% and 45%, the DDP threshold value may be fixed to 80 GB which is a base value of the DDP threshold value. When the fill ratio exceeds 45%, the DDP threshold value may be dynamically adjusted to balance the amount of data preserved in the HPB based on the fill ratio. The adjusted DDP threshold value may be used for managing the space of the DSB blocks.

In the step 706, the dynamic threshold configuration module (DTCM) 214 dynamically configure the DDP threshold value of the SSD 104 based on the adjusted DDP threshold value when the fill ratio exceeds the predefined preservation fill ratio.

Based on the dynamically adjusted DDP threshold value, the DTCM 214 may determine a size of adaptive HPB blocks. The DTCM module 214 may fetch a preservation factor value and a buffer size factor value of the storage device. The buffer size factor value may indicate a percentage of available HPB blocks among the adaptive HPB blocks. The preservation factor may indicate the characteristics of the DSB to preserve data in the DSB. The higher the preservation factor is, the more data may be preserved in the DSB rather than being migrated to the QLC block. The DTCM 214 may calculate the value of a fill ratio function $F(X)$ based on the predefined preservation fill ratio and the preservation factor. The calculation for the fill ratio function $F(X)$ may be estimated from the Equation 2.

The DTCM 214 may determine the DDP threshold value based on the size of the adaptive HPB blocks, the fill ratio function $F(X)$, and the buffer size factor. The buffer size factor and preservation factor are preset to provide a balanced read and write performance of the SSD 104.

The DDP threshold value may be estimated from the Equation3.

Referring to Table 1, exemplary values of the parameters to determine the DDP threshold value are illustrated. Referring to Table 2, the management of the DSB block is illustrated by dynamically varying the DDP threshold value.

In the step 708, the data preservation and migration module (DPMM) 216 may identify the important data among data stored in the DSB blocks, and preserve the important data in HPB blocks of the SSD 104 and migrate remaining data of the HPB blocks to LPB blocks of the SSD 104 based on the configured DDP threshold value during idle time. The DPMM 216 may identify the important data based on at least one of read locality, data locality, and write frequency.

The order in which the flowchart diagram 700 is described is not intended to be construed as a limitation, and the described steps of the method can be combined and may implement alternate methods. Additionally, some of the steps may be skipped without departing from the spirit and scope of the subject matter described herein. The method 700 can be implemented in hardware, software, firmware, or combination thereof.

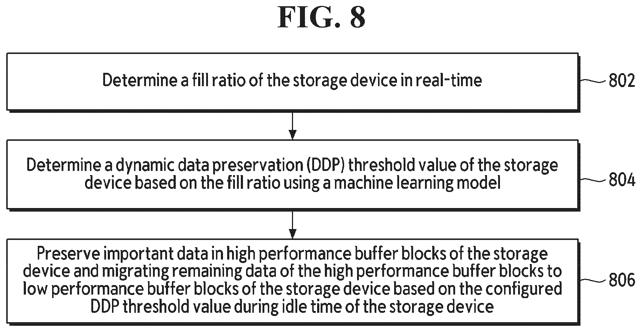

FIG. 8 illustrates a sequence flowchart diagram for providing dynamic data preservation in a semiconductor storage device 104 using machine learning model 606 according to an embodiment of the present inventive concept.

In the step 802, the fill ratio determining module 612 of the SSD 104 may determine the fill ratio in real-time. The fill ratio may indicate the proportion of space occupied by data in the DSB of the SSD 104. As the fill ratio increases, the size of available blocks in the DSB blocks may be reduced. Therefore, it is necessary to determine the fill ratio for accommodating upcoming host requests.

In the step 804, the DTCM module 614 of may determine the DDP threshold value of the SSD 104 based on the fill ratio using the machine learning model 606. The machine learning model 606 may be trained based on a plurality of data sets comprising one or more of fill ratio, high performance buffer blocks size, write performance, capacity of the storage device, and corresponding precalculated DDP threshold value. Furthermore, the machine learning model 606 may be trained based on the one or more performance test results in which the performance test may include PCmark score, PCmark bandwidth, a QLC read count, Foreground (FG) migration count and Background (BG) migration count. The machine learning model 606 testing may comprise providing sample input parameters and checking the machine learning model output DDP threshold value. The DDP threshold value may be derived using the model 606 for further use. The machine learning model 606 may include regression models such as random forest, gradient boosting, and neural network.

In the step 806, the data preservation and migration module (DPMM) 616 may identify the important data among data stored in the HPB of the SSD 104 and migrate the remaining data of the HPB blocks to LPB of the SSD 104 based on the configured DDP threshold value during idle time. The DPMM module 616 may identify the important data based on at least one of read locality, data locality, and write frequency.

The order in which the flowchart diagram 800 is described is not intended to be construed as a limitation, and the described steps of the method can be combined and may implement alternate methods. Additionally, some of the blocks may be skipped without departing from the spirit and scope of the subject matter described herein. The method 800 can be implemented in hardware, software, firmware, or combination thereof.

The illustrated steps are set out to explain the exemplary embodiments, and may be anticipated that ongoing technological development may change particular functions of the embodiments. Further, the boundaries of the functional building blocks have been arbitrarily defined, and alternative boundaries can be defined so long as the specified functions and relationships thereof are appropriately performed.

The foregoing method descriptions and the process flow diagrams are provided merely as illustrative examples and are not intended to require or imply that the steps of the various embodiments must be performed in the order presented. A person of skilled in the art may appreciate the order of steps in the foregoing embodiments may be performed in any order. Any reference to claim elements in the singular, for example, using the articles "a," "an" or "the" is not to be construed as limiting the element to the singular.

Although several embodiments of the present invention are described with reference to the accompanying drawings, the invention may be embodied in many different forms and should not be construed as limited to the embodiments set forth herein. The term "or" is used herein in both the alternative and conjunctive sense, unless otherwise indicated. The terms "illustrative," "example," and "exemplary" are used to be examples with no indication of quality level.

The phrases "in an embodiment," "in one embodiment," "according to one embodiment," and the like generally mean that the feature, structure, or characteristic following the phrase may be included in at least one embodiment of the present disclosure and may be included in more than one embodiment of the present disclosure (importantly, such phrases do not necessarily refer to the same embodiment).

The word "exemplary" is used herein to mean "serving as an example, instance, or illustration." Any implementation described herein as "exemplary" is not necessarily to be construed as preferred or advantageous over other implementations.

If the specification states a component or feature "can," "may," "could," "should," "would," "preferably," "possibly," "typically," "optionally," "for example," "often," or "might" (or other such language) be included or have a characteristic, that component or feature is not required to be included or to have the characteristic. Such component or feature may be optionally included in some embodiments, or it may be excluded.

In some example embodiments, certain ones of the operations herein may be modified or further amplified as described below. Moreover, in some embodiments additional optional operations may also be included. It should be appreciated that each of the modifications, optional additions or amplifications described herein may be included with the operations herein either alone or in combination with any others among the features described herein.

Many modifications and other embodiments of the inventions set forth herein will be understood to one skilled in the art. Although the figures show certain components of the apparatus and systems described herein, it is understood that various other components may be used in conjunction with the supply management system. Therefore, it is to be understood that the inventions are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

**Claims**

1.  A method of providing dynamic data preservation in a storage device (104), the method comprising:

    monitoring (702) a fill ratio of the storage device (104);
    comparing (704) the fill ratio with a predefined preservation fill ratio of the storage device (104) to determine whether the fill ratio exceeds the predefined preservation fill ratio;
    dynamically configuring (706) a dynamic data preservation, DDP, threshold value of the storage device (104) based on the fill ratio of the storage device (104) when the fill ratio exceeds the predefined preservation fill ratio; and
    identifying (708) important data among data stored in high performance buffer, HPB, blocks of the storage device (104) and migrating remaining data which are not identified as important data to low performance buffer, LPB, blocks of the storage device (104) based on the configured DDP threshold value during idle time of the storage device (104).

2. The method of claim 1, wherein the DDP threshold value is adjusted to have a lower value when the fill ratio exceeds the predefined preservation fill ratio.

3. The method of claim 1 or 2, wherein dynamically configuring the DDP threshold value comprises:

   determining a size of adaptive HPB blocks based on the fill ratio;
   fetching a preservation factor value and a buffer size factor value of the storage device (104), wherein the buffer size factor value indicates a portion of the adaptive high performance buffer blocks available for upcoming write requests;
   calculating a value of a fill ratio function based on the predefined preservation fill ratio and the preservation factor value; and
   determining the DDP threshold value based on the size of the adaptive HPB blocks, the value of the fill ratio function, and the buffer size factor value.

4. The method of claim 3, wherein the buffer size factor value and preservation factor value are preset to provide a balanced read and write performance of the storage device (104).

5. The method of any one of claims 1 to 4, wherein the important data is identified based on at least one of read locality, data locality, and write frequency.

6. The method of any one of claims 1 to 5, wherein the portion of important data among data stored in the HPB blocks decreases in proportion to the decrease of the DDP threshold value.

7. A method of providing dynamic data preservation in a storage device (104), the method comprising:

   determining a fill ratio of the storage device (104);
   determining a dynamic data preservation, DDP, threshold value of the storage device (104) based on the fill ratio using a machine learning model (606); and
   identifying important data among data stored in high performance buffer, HPB, blocks of the storage device (104) and migrating remaining data which are not identified as important data to low performance buffer, LPB, blocks of the storage device (104) based on the configured DDP threshold value during idle time of the storage device (104).

8. The method of claim 7, wherein the DDP threshold value is adjusted to have a lower value when the fill ratio exceeds a predefined preservation fill ratio.

9. The method of claim 7 or 8, wherein the important data is identified based on at least one of read locality, data locality, and write frequency.

10. The method of any one of claims 7 to 9, wherein the machine learning model (606) is trained based on a plurality of data sets, and the plurality of data sets comprises at least one of the fill ratio, the size of the HPB, write performance, capacity of the storage device (104), and corresponding precalculated DDP threshold value.

11. The method of any one of claims 7 to 10, wherein the portion of important data among data stored in the HPB blocks decreases in proportion to the decrease of the DDP threshold value.

12. An apparatus to provide dynamic data preservation in a storage device (104), the apparatus comprising:
    a control module (208) configured to perform the method according to any one of the preceding claims

# FIG. 1

100

| HOST DEVICE | 102 |
| STORAGE DEVICE | 104 |
| Memory Device | 105 |
| APPARATUS | 106 |

# FIG. 2

APPARATUS — 106

- 202 Processing Unit
- 204 I/O Interface

208 Control Module

- 210 Monitoring Module
- 212 Comparator Module
- 214 Dynamic Threshold Configuration Module (DTCM)
- 216 Data Preservation and Migration Module (DPMM)

218 Miscelloneous Modules

# FIG. 3

Dynamic Data
preservation threshold

| Static SLC | | Dynamic SLC / TLC | QLC |
|---|---|---|---|

| | | Used space | Free space | | Fill ratio = Current valid LBA / Total valid LBA |

Varies based on Fill
ratio

| Static SLC | | Dynamic SLC / TLC | QLC |
|---|---|---|---|

| | | | Free space after enough IDLE time | |

EP 4 675 415 A1

# FIG. 4

| Fill ratio(%) | in 1TB SSD SLC Buffer Size (GB) |
|---|---|
| 0 | 200 |
| 25 | 180 |
| 50 | 128 |
| 75 | 64 |
| 85 | 40 |
| 91 | 24 |

| 1TB SSD | Static Threshold Policy | | | DDP Threshold Policy | | |
|---|---|---|---|---|---|---|
| Fill Ratio | Static threshold | Space for available for Burst Write | Space for Read | DDP threshold | Space for available for Burst Write | Space for Read |
| 0% | 80GB | 120GB | 80GB | 80GB | 120GB | 80GB |
| 50% | | 48GB | 80GB | 80GB | 48GB | 80GB |
| 75% | | 0GB | 64GB | 25GB | 39GB | 25GB |
| 91% | | 0GB | 24GB | 10GB | 14GB | 10GB |

EP 4 675 415 A1

# FIG. 5

500

| 102 | 104 | 108 |
| HOST DEVICE | STORAGE DEVICE 105 Memory Device | APPARATUS |

# FIG. 6

APPARATUS — 108

Processing Unit — 602

I/O Interface — 604

Machine learning model — 606

Control Module — 610

Fill ratio determining module — 612

Dynamic Threshold Configuration Module (DTCM) — 614

Data Preservation and Migration Module (DPMM) — 616

Miscelloneous Modules — 618

# FIG. 7

| Monitor a fill ratio of the storage device in real-time | ~702 |

| Compare the fill ratio with a predefined preservation fill ratio of the storage device to determine whether the fill ratio exceeds the predefined preservation fill ratio | ~704 |

| Dynamically configure a dynamic data preservation (DDP) threshold value of the storage device based on the fill ratio of the storage device when the fill ratio exceeds the predefined preservation fill ratio | ~706 |

| Preserve important data in high performance buffer (HPB) blocks of the storage device and migrating remaining data of the HPB blocks to low performance buffer blocks of the storage device based on the configured DDP threshold value during idle time of the storage device | ~708 |

# FIG. 8

| | |
|---|---|
| Determine a fill ratio of the storage device in real-time | ~802 |

| | |
|---|---|
| Determine a dynamic data preservation (DDP) threshold value of the storage device based on the fill ratio using a machine learning model | ~804 |

| | |
|---|---|
| Preserve important data in high performance buffer blocks of the storage device and migrating remaining data of the high performance buffer blocks to low performance buffer blocks of the storage device based on the configured DDP threshold value during idle time of the storage device | ~806 |

**EUROPEAN SEARCH REPORT**

Application Number

EP 25 18 1031

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/167089 A1 (NATARAJAN SHANKAR [US] ET AL) 28 May 2020 (2020-05-28)<br>* abstract *<br>* paragraph [0015]; figure 1 *<br>* paragraph [0019] *<br>* paragraph [0034] - paragraph [0045]; figures 3A-E, 5 * | 1-12 | INV.<br>G06F3/06<br>G11C16/16 |
| A | US 2020/133898 A1 (THERENE CHRISTOPHE [US] ET AL) 30 April 2020 (2020-04-30)<br>* abstract *<br>* paragraph [0058] - paragraph [0059]; figure 3 *<br>* paragraph [0065] - paragraph [0069] * | 1-12 | |
| A | US 2022/300185 A1 (AMAKI TAKEHIKO [JP] ET AL) 22 September 2022 (2022-09-22)<br>* abstract *<br>* paragraph [0087] - paragraph [0088]; figure 3 *<br>* paragraph [0124] - paragraph [0126]; figures 4-10 * | 1-12 | TECHNICAL FIELDS SEARCHED (IPC)<br><br>G06F<br>G11C |
| A | US 2015/193299 A1 (HYUN JEA [US] ET AL) 9 July 2015 (2015-07-09)<br>* abstract *<br>* paragraph [0071] * | 1-12 | |

The present search report has been drawn up for all claims

| Place of search | Date of completion of the search | Examiner |
|---|---|---|
| The Hague | 18 November 2025 | Reis Rodrigues, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 1031

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2025

| Patent document cited in search report | Publication date | Patent family member(s) | | Publication date |
|---|---|---|---|---|
| US 2020167089 A1 | 28-05-2020 | NONE | | |
| US 2020133898 A1 | 30-04-2020 | CN | 112997138 A | 18-06-2021 |
| | | EP | 3874358 A1 | 08-09-2021 |
| | | KR | 20200050409 A | 11-05-2020 |
| | | KR | 20240130056 A | 28-08-2024 |
| | | US | 2020133898 A1 | 30-04-2020 |
| | | US | 2021271611 A1 | 02-09-2021 |
| | | US | 2023019264 A1 | 19-01-2023 |
| | | WO | 2020089759 A1 | 07-05-2020 |
| US 2022300185 A1 | 22-09-2022 | JP | 2022143231 A | 03-10-2022 |
| | | US | 2022300185 A1 | 22-09-2022 |
| US 2015193299 A1 | 09-07-2015 | CN | 106170773 A | 30-11-2016 |
| | | DE | 112015000378 T5 | 22-09-2016 |
| | | US | 2015193299 A1 | 09-07-2015 |
| | | US | 2015193302 A1 | 09-07-2015 |
| | | WO | 2015106162 A1 | 16-07-2015 |

EPO FORM P0459

For more details about this annex : see Official Journal of the European Patent Office, No. 12/82